# EUROPÄISCHE PATENTSCHRIFT

(11) **EP 0 461 536 B1**
(45) Veröffentlichungstag und Bekanntmachung des Hinweises auf die Patenterteilung: **02.04.1997**
(21) Anmeldenummer: 91109164.3
(22) Anmeldetag: 05.06.1991
(51) Int. Cl.: G05D 23/13

(54) **Sollwerteinstellvorrichtung für ein thermostatisch geregeltes Mischventil**
Set point control device for a thermostatic regulated mixing valve
Dispositif de réglage de la valeur de consigne pour une vanne mélangeuse régulée thermostatiquement

(30) Priorität: 15.06.1990 DE 4019233
(43) Veröffentlichungstag der Anmeldung: 18.12.1991
(73) Patentinhaber: FRIEDRICH GROHE AKTIENGESELLSCHAFT, D-58675 Hemer (DE)
(72) Erfinder: Kostorz, Jan Ryszard, W-5750 Menden 2 (DE)

(56) Entgegenhaltungen:
- EP-A- 0 242 675
- DE-A- 3 530 812
- US-A- 3 124 304
- US-A- 3 765 604
- US-A- 4 607 788

## Beschreibung

Die Erfindung betrifft eine Sollwerteinstellvorrichtung an einem thermostatgeregelten Mischventil für Kalt- und Warmwasser, bei dem mit einem Drehglied, bestehend aus einer Stellmutter und wenigstens einem becherartigen Griffstück, wobei das Griffstück drehfest mit der Stellmutter verbunden und mit wenigstens einer Stellschraube in Richtung einer Schulter der Stellmutter spannbar ist, auf einem Bewegungsgewinde die Position des Thermostatelements bestimmbar ist und das Drehglied mit einem stellbaren Anschlagring zur Drehbegrenzung zusammenwirkt.
Eine derartige Sollwerteinstellvorrichtung ist aus der Druckschrift DE-A 35 30 812 bekannt, wobei die Bedienelemente relativ ungeschützt an dem Ventilgehäuse vorstehen.
Der wünschenswerte Einsatz dieser Mischbatterie in öffentlichen Gebäuden, wie Krankenhäuser, öffentliche Duschanlagen etc., scheitert jedoch des öfteren wegen der Gefahr einer mutwilligen Beschädigung durch die Benutzer, insbesondere der Sollwerteinstellvorrichtung, wodurch das Mischventil unbrauchbar werden kann.

Der Erfindung liegt die Aufgabe zugrunde, die im Oberbegriff des Anspruchs 1 angegebene Sollwerteinstellvorrichtung zu verbessern und mechanisch hochbelastbar auszubilden, wobei es mit zur Aufgabe gehört, mit geringem Aufwand eine stufenlose Feststellung des Griffstücks für die Temperaturwahl zu ermöglichen. Diese Aufgabe wird erfindungsgemäß dadurch gelöst, daß auf dem Anschlagring eine feststehende Griffhülse befestigt ist, die axial das Bewegungsgewinde und die Stellmutter im wesentlichen übergreift und kapselt, und das Griffstück mit einem ringförmigen Kragen unter die Innenwandung der Griffhülse greift.
Weitere Ausgestaltungen der Erfindung sind in den Ansprüchen 2 bis 10 angegeben.

Mit dieser Ausbildung wird erreicht, daß die Außenflächen der sollwerteinstellvorrichtung aus widerstandsfähigem Material, insbesondere Metall, welches beständig gegen aggressive Reinigungsmethoden, mutwillige Beschädigungen ("Vandalismus") ist.

Außerdem kann mit einfachen Mitteln die Sollwerteinstellvorrichtung in einem beliebigen Temperaturbereich vom Fachmann ohne Spezialwerkzeug festgesetzt werden, wobei auch in der festgesetzten Stellung die vorgewählte Sollwerttemperatur an der Skala ablesbar ist, und der Aufforderungscharakter des Griffstücks zum Verstellen durch die rotationssymmetrische Form sehr gering ist.

Ein Ausführungsbeispiel der Erfindung ist in der Zeichnung dargestellt und wird im folgenden näher beschrieben. Es zeigt
- Figur 1: einen Teil eines thermostatgeregelten Mischventils mit Sollwerteinstellvorrichtung im Schnitt;
- Figur 2: die Sollwerteinstellvorrichtung gemäß Figur 1 mit einem Feststellring und ohne radial vorstehendem Stellhebel;
- Figur 3: die Sollwerteinstellvorrichtung gemäß Figur 2 in der Schnittebene III.

In der Zeichnung ist das thermostatgeregelte Mischventil mit einem nur zum Teil dargestellten Ventilgehäuse 1 gezeigt. In dem Ventilgehäuse 1 sind getrennte Zulaufkanäle 11,12 für Kalt- und Warmwasser ausgebildet, die mit einem Doppelsitzventilkörper 21 von der Sollwerteinstellvorrichtung und einem Thermostaten 2 gesteuert werden. Stromabwärts hinter dem Doppelsitzventilkörper 21 wird somit temperiertes Mischwasser erzeugt (in der Zeichnung nicht dargestellt), welches an einen oder mehrere Verbraucher abgegeben werden kann.
Der Thermostat 2 mit dem Doppelsitzventilkörper 21 ist an einem Kopfstück 3, welches mittels Gewinde 13 in das Ventilgehäuse 1 gedichtet einschraubbar ist, befestigt. Auf dem Kopfstück 3 ist an einem vom Ventilgehäuse 1 vorstehenden Bereich ein Bewegungsgewinde 301 ausgebildet, auf dem eine Stellmutter 30 anordbar ist. In der topfartig ausgebildeten Stellmutter 30 ist ein Druckstück 304 zentral angeordnet, welches über eine Überlast-Sicherheitseinrichtung 5 die axiale Stellposition des Thermostaten 2 im Ventilgehäuse 1 in Abhängigkeit von der Drehstellung der Stellmutter 30 bestimmt.

Auf einem Anschlagflansch des Kopfstücks 3 am Ventilgehäuse 1 ist an der Außenmantelfläche eine Riefenverzahnung 312 ausgebildet, auf die ein Anschlagring 31 drehfest aufsteckbar ist, wobei der Anschlagring 31 in der Stecklage von Schnappzungen 313 axial am Kopfstück 3 gesichert ist. Der Anschlagring 31 trägt an seiner äußeren Mantelfläche eine metallene Griffhülse 32. Zur formschlüssigen Sicherung sind hierbei an der Außenmantelfläche des Anschlagrings 31 Radialzapfen 310 ausgebildet, die in entsprechende Ausnehmungen 321 an der Griffhülse 32 einfassen. Die Radialzapfen 310 sind dabei so dimensioniert, daß der Anschlagring 31 in die Griffhülse 32 einsprengbar ist, wozu er zweckmäßig aus Kunststoff im Spritzgußverfahren hergestellt wird.

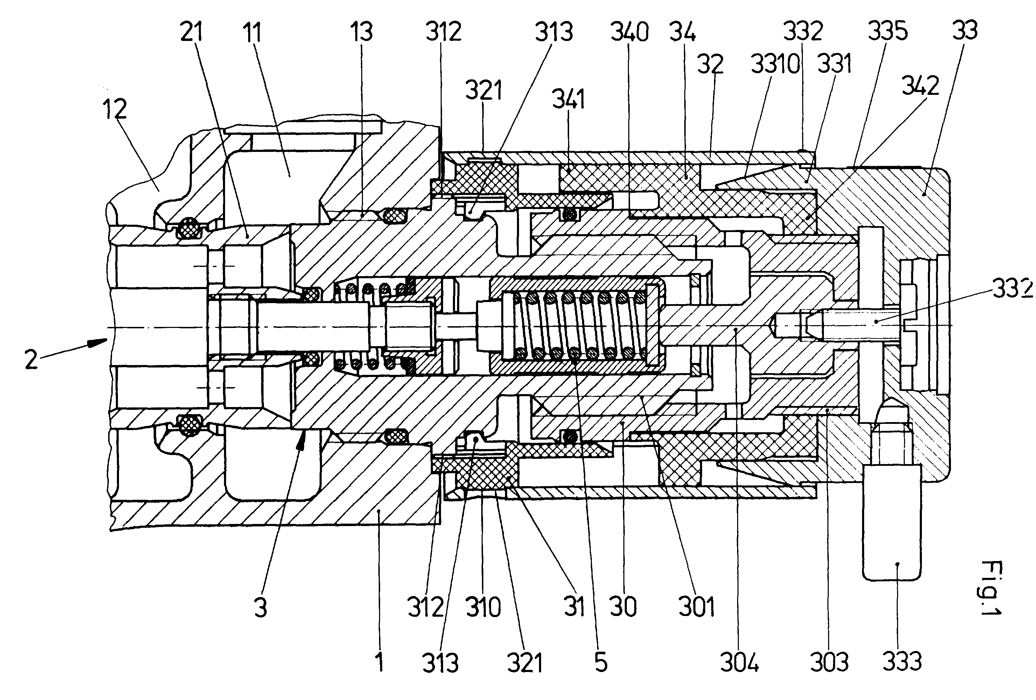

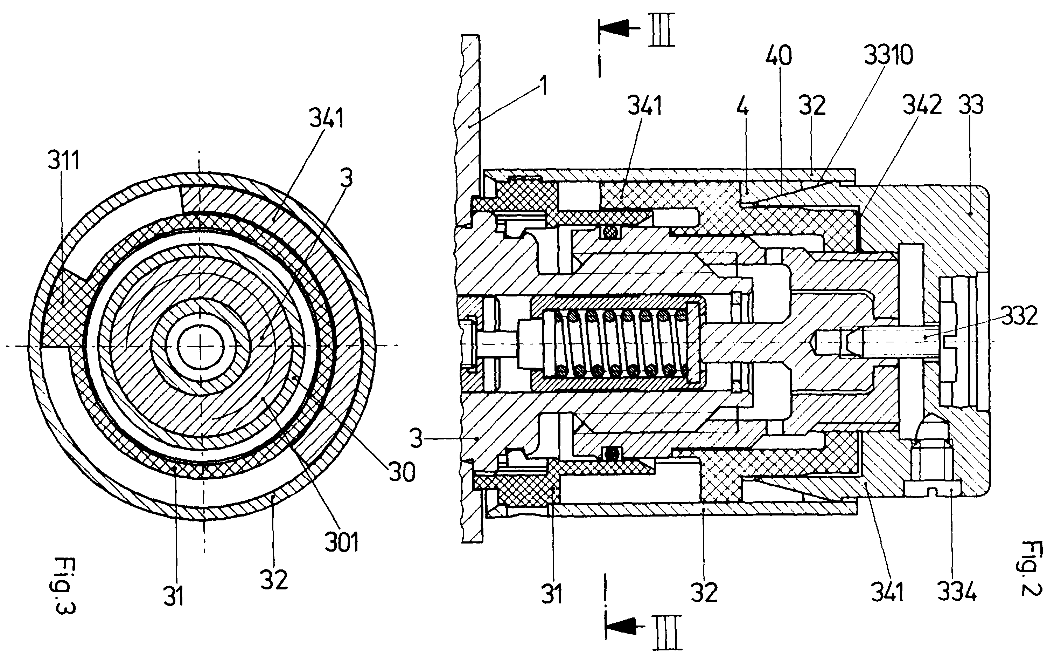

Auf der Stellmutter 30 ist ein Gleit- und Stützlager 34 aus gut gleitfähigem Kunststoff für die Griffhülse 32 an dem dem Anschlagring 31 gegenüberliegenden Endbereich angeordnet. Das Gleit- und Stützlager 34 weist dabei an der dem Ventilgehäuse 1 zugekehrten Stirnseite einen mit dem Anschlagring 31 zusammenwirkenden Drehanschlag 341 auf, mit dem die Begrenzung der Temperaturvorwahl einstellbar ist, wie es insbesondere aus Figur 3 der Zeichnung zu entnehmen ist.
Zur Einstellung der Temperaturvorwahl ist stirnseitig zur Stellmutter 30 ein topfartiges Griffstück 33 angeordnet und mittels Schraube 332 axial gegen die Stellmutter 30 spannbar. An dem Griffstück 33 ist ein ringförmiger Kragen 331 ausgebildet, mit dem das Griffstück 33 in die Griffhülse 32 hineingreift. Der Kragen 331 kann hierbei als weiteres Stützlager für die Griffhülse 32 ausgebildet sein. Zur Axialsicherung des Griffstücks 33 ist an dem Gleit- und Stützlager 34 eine in den Kragen 331 hineingreifende Axialanlage 342 ausgebildet, wobei die Axialanlage 342 und das Griffstück 33 zusammen mittels Riefenverzahnung 303 drehfest mit der Stellmutter 30 gekoppelt sind. Zur axialen Fixierung des Gleit- und Stützlagers 34 mit dem Griffstück 33 ist an der Stellmutter 30 eine Schulter 340 ausgebildet, so daß diese Schulter 340 ein Widerlager zu der Spannbewegung der Schraube 332 bildet. Das über die Riefenverzahnung 303 mit der Stellmutter 30 gekoppelte, ebenfalls aus Metall hergestellte Griffstück 33 weist einen radial vorstehenden Stellhebel 333 zur guten Handhabbarkeit auf. Auf der von außen sichtbaren Mantelfläche des Griffstücks 33 ist eine Temperaturskala 335 angeordnet, die mit einer Einstellmarke 332 auf der Griffhülse 32 zusammenwirkt. Nach einer entsprechenden Justierung des Thermostaten 2 kann somit in Abhängigkeit von der Drehstellung des Griffstücks 33 eine bestimmte Mischwassertemperatur als Sollwert eingestellt werden.

Soll eine Verstellung der Mischwassertemperatur für die verschiedenen Benutzer nicht möglich sein, so kann ein Klemmring 4 - vorzugsweise zur guten Spreizbarkeit mit einem Längsschlitz versehen - an der dem Drehanschlag 341 gegenüberliegenden Stirnseite des Gleit- und Stützlagers 34 zur Anlage gebracht werden, wobei der Klemmring 4 eine konische Innenmantelfläche 40 aufweist, die mit einer entsprechend ausgebildeten Außenmantelfläche 3310 des Kragens 341 zusammenwirkt. Der Klemmring 4 ist dabei so bemessen, daß bei einem festen Eindrehen der Schraube 332 der Klemmring 4 gegen die innere Mantelfläche der Griffhülse 32 gepreßt wird und hiermit einen Reibschluß bildet, so daß das Griffstück 33 in der gewählten Temperatureinstellung für den Benutzer unverdrehbar ist, wobei allerdings die gewählte Temperatur auf der Skala ablesbar ist. Für den Betrieb des Mischventils mit fest eingestellter Sollwerteinstellvorrichtung kann zweckmäßig der Stellhebel 333 aus dem Griffstück 33 entfernt und die Befestigungsöffnung mit einer Verschlußschraube 334 geschlossen werden.
Die mechanisch hochbelastbare Sollwerteinstellvorrichtung kann somit sowohl als eine von den verschiedenen Benutzern stellbare Einrichtung, wobei mit Hilfe des Drehanschlags 341 und dem Anschlagring 31 eine Drehbegrenzung, z.B. als Verbrühungsschutz, eingesetzt als auch als Sollwerteinstellvorrichtung, die voreinstellbar ist und der Benutzer keinen Einfluß auf die Mischwassertemperatur nehmen kann, verwendet werden.

## Patentansprüche

1. Sollwerteinstellvorrichtung an einem thermostatisch geregelten Mischventil für Kalt- und Warmwasser, bei dem mit einem Drehglied, bestehend aus einer Stellmutter (30) und wenigstens einem becherartigen Griffstück (33), wobei das Griffstück (33) drehfest mit der Stellmutter (30) verbunden und mit wenigstens einer Schraube (332) in Richtung einer Schulter (340) der Stellmutter (30) spannbar ist, auf einem Bewegungsgewinde (301) die Position des Thermostatelements bestimmbar ist und das Drehglied mit einem stellbaren Anschlagring (31) zur Drehbegrenzung zusammenwirkt, dadurch gekennzeichnet, daß auf dem Anschlagring (31) eine feststehende Griffhülse (32) befestigt ist, die axial das Bewegungsgewinde (301) und die Stellmutter (30) im wesentlichen übergreift und kapselt, und das Griffstück (33) mit einem ringförmigen Kragen (331) unter die Innenwandung der Griffhülse (32) greift.

2. Sollwerteinstellvorrichtung nach Anspruch 1, dadurch gekennzeichnet, daß der ringförmige Kragen (331) im von der Griffhülse (32) verdeckten Bereich eine konische Außenmantelfläche (3310) hat und wahlweise einen mit einer entsprechenden konischen Innenmantelfläche (40) versehener Klemmring (4) zwischen einer Schulter (340) an der Stellmutter (30) einsetzbar ist, wobei der Klemmring (4) so bemessen ist, daß nach einem Anziehen einer Schraube (332) ein Reibschluß zwischen dem Innenmantel der Griffhülse (32) und dem Griffstück (33) entsteht, so daß das Griffstück (33) in dieser Lage drehfest mit der unbeweglichen Griffhülse (32) verbunden ist.

3. Sollwerteinstellvorrichtung nach Anspruch 1 oder 2, dadurch gekennzeichnet, daß die Griffhülse (32) und das Griffstück (33) aus Metall hergestellt sind.

4. Sollwerteinstellvorrichtung nach einem der Ansprüche 1 bis 3, dadurch gekennzeichnet, daß auf der Stellmutter (30) ein Gleit- und Stützlager (34) für die Griffhülse (32) an dem dem Anschlagring (31) gegenüberliegenden Endbereich angeordnet ist.

5. Sollwerteinstellvorrichtung nach wenigstens einem der Ansprüche 1 bis 4, dadurch gekennzeichnet, daß eine formschlüssige Verbindung des Anschlagrings (31) mit der Griffhülse (32) vorgesehen ist, wobei der Anschlagring (31) mit Radialzapfen (310) in entsprechende Ausnehmungen (321) der Griffhülse (32) einrastet.

6. Sollwerteinstellvorrichtung nach wenigstens einem der Ansprüche 1 bis 5, dadurch gekennzeichnet, daß das Gleit- und Stützlager (34) axial vorstehende Bereiche hat, wobei an der dem Ventilgehäuse (1) zugekehrten Stirnseite ein mit dem Anschlagring (31) zusammenwirkender Drehanschlag (341) zur Begrenzung der Temperaturvorwahl ausgebildet ist, während an der dem Griffstück (33) zugekehrten Stirnseite ein im Durchmesser verringerter Bereich als Axialanlage (342) für den Drehgriff (33) vorgesehen ist.

7. Sollwerteinstellvorrichtung nach wenigstens einem der Ansprüche 1 bis 6, dadurch gekennzeichnet, daß das Gleit- und Stützlager (34) und das Griffstück (33) mittels Riefenverzahnung (303) auf der Stellmutter (30) drehfest gehaltert sind, wobei zur Axialsicherung das Gleit- und Stützlager (34) zusammen mit dem Griffstück (33) von wenigstens einer Schraube (332) gegen die Schulter (340) an der Stellmutter (30) preßbar ist.

8. Sollwerteinstellvorrichtung nach wenigstens einem der Ansprüche 1 bis 7, dadurch gekennzeichnet, daß der Anschlagring (31) mittels Riefenverzahnung (312) drehfest und von Schnappzungen (313) in der axialen Stecklage mit einem Kopfstück (3) des Ventilgehäuses (2) verbunden ist.

9. Sollwerteinstellvorrichtung nach wenigstens einem der Ansprüche 1 bis 8, dadurch gekennzeichnet, daß an dem Griffstück (33) ein etwa radial vorstehender Stellhebel (333) vorgesehen ist, der bei festgestelltem Griffstück (33) entfernt werden kann.

10. Sollwerteinstellvorrichtung nach wenigstens einem der Ansprüche 1 bis 9, dadurch gekennzeichnet, daß an dem ringförmigen Kragen (331) des Griffstücks (33) ein weiteres Stützlager für die Griffhülse (32) ausgebildet ist.

## Claims

1. Desired value setting device on a thermostatically controlled mixing valve for cold and hot water, in which, by means of a rotatable member, consisting of an adjusting nut (30) and at least one cup-like grip piece (33), the grip piece (33) being non-rotatably connected to the adjusting nut (30) and arranged to be tightened by means of at least one screw (332) in the direction of a shoulder (340) of the adjusting nut (30), the position of the thermostat element on a motion screw thread (301) can be determined, and the rotatable member co-operates with an adjustable stop ring (31) for limitation of rotation, characterized in that on the stop ring (31) there is fastened a fixed-position grip sleeve (32) which axially engages substantially over, and encloses, the motion screw thread (301) and the adjusting nut (30), and the grip piece (33) engages beneath the inner wall of the grip sleeve (32) with an annular collar (331).

2. Desired value setting device according to claim 1, characterized in that the annular collar (331), in the region covered by the grip sleeve (32), has a conical outer surface (3310) and a clamping ring (4) provided with a corresponding conical inner surface (40) can be selectively inserted between a shoulder (340) on the adjusting nut (30), the clamping ring (4) being of such dimensions that after a screw (332) has been tightened a frictional connection is produced between the inner surface of the grip sleeve (32) and the grip piece (33), so that the grip piece (33) in this position is non-rotatably connected to the immovable grip sleeve (32).

3. Desired value setting device according to claim 1 or 2, characterized in that the grip sleeve (32) and the grip piece (33) are made of metal.

4. Desired value setting device according to one of Claims 1 to 3, characterized in that a sliding and supporting bearing (34) for the grip sleeve (32) is arranged on the adjusting nut (30) in the opposite end region from the stop ring (31).

5. Desired value setting device according to at least one of claims 1 to 4, characterized in that an interlocking connection of the stop ring (31) with the grip sleeve (32) is provided, the stop ring (31) engaging with radial pins (310) in corresponding recesses (321) of the grip sleeve (32).

6. Desired value setting device according to at least one of Claims 1 to 5, characterized in that the sliding and supporting bearing (34) has axially projecting regions, a rotatable stop (341) which co-operates with the stop ring (31) in order to limit the temperature selection being formed on the end facing towards the valve housing (1), while on the end facing towards the grip piece (33) a region of reduced diameter is provided as axial supporting surface (342) for the rotary grip (33).

7. Desired value setting device according to at least one of Claims 1 to 6, characterized in that the sliding and supporting bearing (34) and the grip piece (33) are non-rotatably secured to the adjusting nut (30) by means of grooved toothing (303), the sliding and supporting bearing (34), together with the grip piece (33), being arranged to be pressed by at least one screw (332) against the shoulder (340) on the adjusting nut (30) to secure them axially.

8. Desired value setting device according to at least one of Claims 1 to 7, characterized in that the stop ring (31) is non-rotatably connected by means of grooved toothing (312), and by snap-in tongues (313), in the axial inserted position, to a head part (3) of the valve housing (2).

9. Desired value setting device according to at least one of Claims 1 to 8, characterized in that on the grip piece (33) there is provided an adjusting lever (333) which projects approximately radially and which can be removed when the grip piece (33) is fixed.

10. Desired value setting device according to at least one of Claims 1 to 9, characterized in that on the annular collar (331) of the grip piece (33) a further support bearing for the grip sleeve (32) is formed.

## Revendications

1. Dispositif de réglage d'une valeur de consigne d'un mitigeur thermostatique pour de l'eau froide et de l'eau chaude, dans lequel un organe tournant composé d'un écrou de réglage (30) et d'au moins une poignée (33) en forme de gobelet, solidaire en rotation de l'écrou (30), avec au moins une vis (332) à serrage en direction d'un épaulement (340) de l'écrou de réglage (30), permet de définir, sur un filetage de déplacement (301), la position de l'élément thermostatique, l'organe tournant coopérant avec une bague de butée réglable (31), pour limiter la rotation,
caractérisé en ce qu'
un manchon de préhension (32) est fixé solidairement à la bague de butée (31) en entourant principalement le filetage de déplacement (301) et l'écrou de réglage (30), et en les encapsulant, la poignée (33) venant en dessous de la paroi intérieure du manchon de préhension (32) par une collerette annulaire (331).

2. Dispositif de réglage d'une valeur de consigne selon la revendication 1,
caractérisé en ce que
la collerette annulaire (331) a une surface enveloppe extérieure conique (3310) dans la zone cachée par le manchon de préhension (32) et, au choix, une bague de serrage (4) ayant une surface enveloppe intérieure (40) de conicité correspondante, peut se placer entre l'épaulement (340) de l'écrou de réglage (30), la bague de serrage (4) étant dimensionnée pour qu'après serrage d'une vis (332), il y ait une liaison par frottement entre l'enveloppe intérieure du manchon de préhension (32) et la poignée (33) pour que, dans cette position, la poignée (33) soit reliée solidairement en rotation au manchon de préhension (32), fixe.

3. Dispositif de réglage d'une valeur de consigne selon la revendication 1 ou 2,
caractérisé en ce que
le manchon de préhension (32) et la poignée (33) sont en métal.

4. Dispositif de réglage d'une valeur de consigne selon l'une des revendications 1 à 3,
caractérisé en ce qu'
un palier de glissement et d'appui (34) pour le manchon de préhension (32) est prévu sur l'écrou de réglage (30), dans la zone d'extrémité opposée à celle de la bague de butée (31).

5. Dispositif de réglage d'une valeur de consigne selon au moins l'une des revendications 1 à 4,
caractérisé par
une liaison par la forme de la bague de butée (31) et du manchon de préhension (32), la bague de butée (31) étant accrochée par des tétons radiaux (310) dans des cavités correspondantes (321) du manchon de préhension (32).

6. Dispositif de réglage d'une valeur de consigne selon au moins l'une des revendications 1 à 5,
caractérisé en ce que
le palier de glissement et d'appui (34) comporte des zones axialement en saillie et, sur la face frontale tournée vers le corps de mitigeur (1), il est prévu une butée de rotation (341) coopérant avec la bague de butée (31) pour limiter la présélection de température, alors que, sur la face frontale tournée vers la poignée (33), il est prévu une zone de diamètre réduit comme appui axial (342) pour la poignée tournante (33).

7. Dispositif de réglage d'une valeur de consigne selon au moins l'une des revendications 1 à 6,
caractérisé en ce que
le palier de glissement et d'appui (34) et la poignée (33) sont maintenus solidairement en rotation sur l'écrou de réglage (30) par une denture moletée (303) et, pour le blocage axial, le palier de glissement et d'appui (34) peut être pressé avec la poignée (33), par au moins une vis (332), contre l'épaulement (340) de l'écrou de réglage (30).

8. Dispositif de réglage d'une valeur de consigne selon au moins l'une des revendications 1 à 7,
caractérisé en ce que
la bague de butée (31) est reliée par une denture moletée (312), solidairement en rotation et, par les languettes d'encliquetage (313) en position d'extension axiale, avec une pièce de tête (30) du corps de mitigeur (2).

9. Dispositif de réglage d'une valeur de consigne selon au moins l'une des revendications 1 à 8,
caractérisé en ce qu'
un levier de réglage (333) est prévu en saillie, sensiblement dans la direction radiale, sur la poignée (33), ce levier pouvant être enlevé lorsque la poignée (33) est fixée.

10. Dispositif de réglage d'une valeur de consigne selon au moins l'une des revendications 1 à 9,
caractérisé en ce qu'
un autre palier d'appui pour le manchon de préhension (32) est prévu sur la collerette annulaire (331) de la poignée (33).
